# EUROPÄISCHE PATENTSCHRIFT

(11) **EP 1 326 918 B1**
(45) Veröffentlichungstag und Bekanntmachung des Hinweises auf die Patenterteilung: **28.06.2006**
(21) Anmeldenummer: 01978429.7
(22) Anmeldetag: 17.10.2001
(51) Int. Cl.: C08L 23/00, B41M 5/00, B29C 59/16

(54) **VERWENDUNG EINER POLYOLEFINFOLIE ALS FLIP-CHART-FOLIE**
USE OF A POLYOLEFIN FILM AS A FLIP CHART
UTILISATION D'UNE FEUILLE DE POLYOLEFINE COMME FLIP-CHART

(30) Priorität: 17.10.2000 DE 10051495
(43) Veröffentlichungstag der Anmeldung: 16.07.2003
(73) Patentinhaber: NOPAR International GmbH, 28197 Bremen (DE)
(72) Erfinder: SCHMITT, Karl, Stefan, 40477 Düsseldorf (DE); GUTOWSKI, Jörg, Alois, 4450 Sissach (CH)
(74) Vertreter: Eisenführ, Speiser & Partner
(86) Internationale Anmeldenummer: PCT/EP2001/012017
(87) Internationale Veröffentlichungsnummer: WO 2002/032991

(56) Entgegenhaltungen:
- WO-A-00/44555
- WO-A-96/08318
- DE-A- 1 629 491
- US-A- 5 638 249
- US-A- 5 981 079

## Beschreibung

Die Erfindung betrifft die Verwendung einer Polyolefinfolie wie in den Ansprüchen definiert als Flip-Chart-Folie.

Es ist bekannt, Polyethylen-Folien mit einer Oberflächenpolarisierung dadurch zu versehen, daß die zu aktivierende Oberfläche beflämmt wird. Bekannt ist auch, durch Behandeln mit Corona-Entladungen eine Polyolefin-Oberfläche so zu ändern, daß eine Bedruckung leichter möglich ist. Die bekannten Verfahren sorgen für eine Oberflächenpolarisierung dadurch, daß die genannten sauerstoffhaltigen Gruppen angelagert oder aktiviert werden. Bekannt ist auch die Verwendung einer derartig behandelten Kunststoff-Folie zur Abdeckung von zu schützenden Flächen und zur Begrenzung von farbfreien Flächen.

Abweichend von dieser bekannten Verwendung einer Polyolefin-Folie ergibt sich ein überraschender weiterer Verwendungszweck dadurch, daß eine derartige Folie als zu beschreibendes oder zu bedruckendes Medium eingesetzt wird. Es ist bekannt, daß Polyolefin-Folien an sich schlecht zu beschreiben oder zu bedrucken sind, wenn nicht spezielle Tinten o. dgl. verwendet werden. Diesem Mangel wird abgeholfen, indem die vorbeschriebene Oberflächenbehandlung einer Folie durchgeführt wird. Eine solche Folie kann aber nicht als eine Art Flipchart-Folie auf einer Oberfläche zum dauernden Haften gebracht werden, wenn nicht zusätzliche Klebemittel oder Klebstoffe verwendet werden.

Die Polyolefin-Folien sollen sowohl beschreibbar als auch auf einer glatten oder fast glatten Oberfläche haftend sein, ohne daß Klebstoff verwendet wird. Damit eröffnet sich eine neue Verwendung einer Polyolefinfolie als zu beschreibendes oder zu bedruckendes Medium. Verwendet werden können an sich bekannte Folien, bei der ein- oder beidseitig durch Oberflächenbehandlung sauerstoffhaltige Gruppen an der Folienoberfläche angelagert sind, und welche Polyolefinfolie durch nachfolgende elektrostatische Aufladung stark oberflächenpolarisiert ist, wobei bei der Foliendicke zwischen 5 und 250 µm das Flächengewicht und die erzeugte elektrostatische Haftkraft aufgrund der Bemessung der Oberflächenpolarisierung so aufeinander abgestimmt sind, daß die Folien zumindest bei Auflage der behandelten Folie auf eine saubere, getrocknete und plane Floatglas-Fläche ohne Zeitbegrenzung auf dieser Fläche in jeder Lage haften bleiben.

Eine Oberflächenbearbeitung kann beispielsweise mit einer Gasflamme mit Sauerstoffüberschuß, also mit unterstöchiometrischer Verbrennung, durchgeführt werden, als auch mit einer oxidierend wirkenden Oberflächenbehandlung durch das Corona-Verfahren, wie in der DE-A-3537614 beschrieben. Bei dem Corona-Verfahren wird eine Folienbahn durch einen Lichtbogen-Bereich geführt, bei dem zahlreiche kleine Entladungen für winzige Narben auf der Kunststoffoberfläche sorgen und dabei gleichzeitig die physikalischen und chemischen Eigenschaften der Oberfläche ändern.

Es zeigt sich aber, daß diese Oberflächenbearbeitung im allgemeinen nicht ausreicht, eine elektrostatische Haftkraft ohne Zeitbegrenzung zu erzeugen. Erst durch nachfolgende elektrostatische Aufladung wird eine wesentliche Verbesserung der Haftkraft erreicht, die es ermöglicht, daß die Folie bei Auflage ohne Zeitbegrenzung haften bleibt. Es zeigt sich hierbei sogar der Effekt, daß die Haftkraft nach Hängenbleiben der Folie für eine gewisse Zeit (ein bis 24 Stunden) sich noch vergrößert.

Eine zusätzliche Aufladung wird vorzugsweise durch ein elektronegatives Feld erzeugt, welches beispielsweise durch Auflagestäbe, an denen die Folie vorbeigeführt wird, erzeugt wird. Es zeigt sich jedoch, daß auch ein elektropositives Feld eine ähnliche Wirkung hervorruft.

Die Bemessung der Haftkraft muß für eine bestimmte Folie empirisch ermittelt werden. Mindestens muß die Haftkraft so bemessen sein, daß die Folie zumindest bei Auflage der behandelten Seite auf eine saubere, getrocknete und plane Floatglas-Fläche ohne Zeitbegrenzung auf dieser Fläche in jeder Lage haften bleibt. Eine Floatglas-Fläche wurde deshalb als Referenz gewählt, weil Glas einen hohen elektrischen Widerstand aufweist. Es zeigt sich aber, daß schon mit geringer Erhöhung der Haftkraft zu rechnen ist, wenn die Oberflächenbehandlung und Aufladung verstärkt wird. Die Folie haftet dann auch auf lackierten und unlackierten Holzoberflächen, auf lackierten Metalloberflächen, auf Kunststoff-Folien und sogar auf leitenden Oberflächen.

Ein weiterer positiver Effekt ist, daß die Polyolefin-Folie im haftenden Zustand auch als Haftgrund für die klebstofffreie Fixierung von weiteren leichten Gegenständen, wie Papierblättern, Fotos und Kunststofffolien-Abschnitten dienen kann und somit auch als eine Art Pinwand dienen kann.

Die Folie kann ein- und mehrschichtig sein. Vorzugsweise wird hier eine zwei- bis dreischichtiges Folie verwendet, die coextrudiert ist, um die jeweiligen Oberflächen-Eigenschaften möglichst positiv gestalten zu können.

Als Polyolefin-Basismaterial eignet sich insbesondere Polyethylen oder Polypropylen, insbesondere LDPE. Das Polyolefin-Basismaterial kann mit einem oder mehreren anorganischen Füllmaterialien gefüllt werden, wobei diese vorzugsweise aus der Gruppe Calciumcarbonat, Titandioxid, Talkum oder Kreide ausgewählt sind und bis zu einem Anteil von 45 Gew.-%, bezogen auf die Endmischung, beigemischt sind. Derartige Füllmittel beeinflussen die Transparenz, aber auch die Beschreib- und Bedruckbarkeit.

Für den angegebenen Verwendungszweck eignet sich eine Folie, die teil-transparent ist, wobei die Transparenz zwischen 10 und 90% (100% entspricht völliger Klarheit) liegt. Hierbei ist besonders vorteilhaft, wenn die Folie auf beiden Seiten oberflächenbehandelt ist, eine Seite mit einem Raster o. dgl. bedruckt ist und beidseitig oder nur auf der dem Druck gegenüberliegenden Seite mit einer Aufladung zusätzlich oberflächenpolarisiert ist. Eine solche Folie eignet sich besonders gut als Flipchart-Folie, da das Raster gut zu erkennen ist und die Folie insbesondere auf ein beleuchtetes Fenster o. dgl. aufgelegt werden kann.

Durch die vorstehende Beschreibung wird deutlich, daß sich für eine elektrostatisch aufgeladene Folie ein überraschender Verwendungszweck ergibt, wobei sich Foliendicken von 5 bis 250µm und vorzugsweise zwischen 10 und 100 µm eignen.

## Patentansprüche

1. Verwendung einer teil-transparenten Polyolefinfolie, deren Transparenz zwischen 10 und 90 % liegt, wobei 100 % völliger Klarheit entspricht, mit einer Foliendicke zwischen 5 und 250 µm,
an deren Folienoberfläche durch ein- oder beidseitige Oberflächenbehandlung sauerstoffhaltige Gruppen angelagert sind und
welche durch eine nachfolgende elektrostatische Aufladung stark oberflächenpolarisiert ist, wobei die elektrostatische Haftkraft durch Bemessung der Oberflächenpolarisation so auf das Flächengewicht der Folie abgestimmt ist, so dass die Folie mit der behandelten Seite auf einer sauberen, getrockneten und planen Floatglas-Fläche ohne Zeitbegrenzung in jeder Lage haften bleibt,
als Flip-Chart-Folie, die beschreibbar ist und einen Haftgrund für eine klebstofffreie Fixierung von Papierblättern und Fotos bildet.

2. Verwendung einer Polyolefinfolie nach Anspruch 1, mit der Maßgabe, dass die Foliendicke einen Wert zwischen 10 und 100 µm aufweist.

3. Verwendung einer Polyolefinfolie nach Anspruch 1 oder 2, mit der Maßgabe, dass die Folie 2 oder 3 durch Coextrusion hergestellte Schichten aufweist.

4. Verwendung einer Polyolefinfolie nach einem der Ansprüche 1 bis 3, mit der Maßgabe, dass die Folie ein oder mehrere anorganische Füllmaterialien aus der Gruppe Calciumkarbonat, Titandioxid, Talkum und Kreide enthält, wobei der Anteil der Füllmaterialien bis zum 45 Gew.-% bezogen auf die Endmischung beträgt.

5. Verwendung einer Polyolefinfolie nach einem der Ansprüche 1 bis 4, mit der Maßgabe, dass eine Folienseite mit einem Raster bedruckt ist.

## Claims

1. Use of a partially transparent polyolefin film, the transparency of which is from 10 to 90 %, where 100 % corresponds to complete clarity, having a film thickness of from 5 to 250 µm,
to the film surface of which oxygen-containing groups have been attached by surface treatment of one or both sides, and
which has been strongly surface-polarised by subsequent electrostatic charging, wherein the amount of surface polarisation is such that the electrostatic adhesion is so matched to the weight per unit area of the film that the film, with its treated side, adheres to a clean, dry and flat float glass surface in any position for an unlimited time,
as a flip-chart film which can be written on and which forms an adhesive base for the adhesive-free fixing of sheets of paper and photographs.

2. Use of a polyolefin film according to claim 1, with the proviso that the film thickness has a value of from 10 to 100 µm.

3. Use of a polyolefin film according to claim 1 or 2, with the proviso that the film has 2 or 3 layers which have been produced by coextrusion.

4. Use of a polyolefin film according to any one of claims 1 to 3, with the proviso that the film comprises one or more inorganic fillers from the group calcium carbonate, titanium dioxide, talc and chalk, the amount of fillers being up to 45 wt.%, based on the final mixture.

5. Use of a polyolefin film according to any one of claims 1 to 4, with the proviso that one side of the film has been printed with a grid.

## Revendications

1. Utilisation d'une feuille de polyoléfine partiellement transparente dont la transparence est située entre 10 et 90 %, où 100 % correspond à la transparence totale, ayant une épaisseur de feuille entre 5 et 250 µm,
à la surface de feuille de laquelle des groupes contenant de l'oxygène sont fixés par traitement de la surface d'un côté ou des deux côtés et qui est fortement polarisée en surface par une décharge électrostatique consécutive, où l'adhérence électrostatique est ajustée par dimensionnement de la polarisation de la surface au grammage de la feuille de telle sorte que la feuille adhère durablement en toute position par le côté traité sur une surface de verre flotté propre, séchée et plane sans limite dans le temps,
comme feuille flip-chart qui est inscriptible et forme une base adhésive pour une fixation sans adhésif de feuilles de papier et de photos.

2. Utilisation d'une feuille de polyoléfine selon la revendication 1 avec la condition que l'épaisseur de la feuille présente une valeur entre 10 et 100 µm.

3. Utilisation d'une feuille de polyoléfine selon la revendication 1 ou 2 avec la condition que la feuille présente 2 ou 3 couches produites par coextrusion.

4. Utilisation d'une feuille de polyoléfine selon l'une des revendications 1 à 3 avec la condition que la feuille contienne une ou plusieurs matières de charge inorganiques du groupe carbonate de calcium, dioxyde de titane, talc et craie, où la proportion des matières de charge peut atteindre 45 % en masse par rapport au mélange final.

5. Utilisation d'une feuille de polyoléfine selon l'une des revendications 1 à 4 avec la condition qu'un côté de la feuille soit imprimé avec un réseau.
